# EUROPÄISCHE PATENTSCHRIFT

(11) **EP 4 323 248 B1**
(45) Veröffentlichungstag und Bekanntmachung des Hinweises auf die Patenterteilung: **11.06.2025**
(21) Anmeldenummer: 22720671.1
(22) Anmeldetag: 05.04.2022
(51) Int. Cl.: B60W 30/18, B60W 30/14, B60W 30/12, B60W 40/072, B60W 50/14, B60W 60/00

(54) **VERFAHREN ZUM BETREIBEN EINES FAHRERASSISTENZSYSTEMS UND FAHRZEUG MIT EINEM FAHRERASSISTENZSYSTEM**
METHOD FOR OPERATING A DRIVER-ASSISTANCE SYSTEM, AND VEHICLE HAVING A DRIVER-ASSISTANCE SYSTEM
PROCÉDÉ FAIRE FONCTIONNER UN SYSTÈME D'ASSISTANCE AU CONDUCTEUR ET VÉHICULE ÉQUIPÉ D'UN SYSTÈME D'ASSISTANCE AU CONDUCTEUR

(30) Priorität: 16.04.2021 DE 102021203786
(43) Veröffentlichungstag der Anmeldung: 21.02.2024
(73) Patentinhaber: VOLKSWAGEN AKTIENGESELLSCHAFT, 38440 Wolfsburg (DE)
(72) Erfinder: MÜNNING, Daniel, 38124 Braunschweig (DE); GÜNTERBERG, Thomas, 38448 Wolfsburg (DE); OSCHLIES, Hendrik, 38106 Braunschweig (DE)
(86) Internationale Anmeldenummer: PCT/EP2022/058929
(87) Internationale Veröffentlichungsnummer: WO 2022/218745

(56) Entgegenhaltungen:
- DE-A1- 102012 009 238
- US-A1- 2002 032 514
- US-A1- 2020 180 617

## Beschreibung

Die Erfindung betrifft ein Verfahren zum Betreiben eines Fahrerassistenzsystems eines Fahrzeugs, bei welchem das Fahrerassistenzsystem eine Fahrgeschwindigkeit wenigstens eines Fremdfahrzeugs zumindest mittelbar berücksichtigt. Mit dieser Fahrgeschwindigkeit hat das wenigstens eine Fremdfahrzeug eine in Fahrtrichtung des Fahrzeugs vor dem Fahrzeug angeordnete Kurve durchfahren. Des Weiteren betrifft die Erfindung ein Fahrzeug mit einem Fahrerassistenzsystem.

Die DE 10 2012 009 238 A1 beschreibt ein Verfahren zur vorausschauenden Längsführung eines Fahrzeugs. Ein informationsgenerierendes Fahrzeug, das sich auf der gleichen Fahrtroute in gleicher Fahrtrichtung vor einem längsgeführten Fahrzeug befindet, überträgt an das längsgeführte Fahrzeug externe Informationen, welche analysiert werden. Auf der Grundlage der externen Informationen werden Fahrempfehlungen für die Längsführung des längsgeführten Fahrzeugs ausgegeben oder Steuerbefehle zum Eingriff in ein untergeordnetes Fahrassistenzsystem zur Längsführung des längsgeführten Fahrzeugs erzeugt.

Die US 9 387 860 B2 beschreibt eine Verwendung von Untersuchungsdaten in einem Fahrerassistenzsystem eines Fahrzeugs. Die Untersuchungsdaten geben das tatsächliche Fahrverhalten von Fahrern an, etwa wie diese beschleunigen oder bremsen, wenn sie auf einer Straße durch eine Kurve fahren. Wenn das mit dem Fahrerassistenzsystem ausgestattete Fahrzeug zu schnell in diese Kurve einfährt, kann der Fahrer des Fahrzeugs gewarnt oder das Fahrzeug mittels des Fahrerassistenzsystems abgebremst werden.

Weitere Verfahren, bei welchen ein Fahrverhalten von Fremdfahrzeugen analysiert wird, sind beispielsweise in der US 8 903 593 B1, in der US 2002/032514 A1 und in der US 2015/0154864 A1 beschrieben.

Es ist Aufgabe der Erfindung, ein Verfahren zum Betreiben eines Fahrerassistenzsystems zu verbessern, und ein Fahrzeug mit einem solchen Fahrerassistenzsystem anzugeben.

Diese Aufgaben wird durch ein Verfahren mit den Merkmalen des Patentanspruchs 1 und durch ein Fahrzeug mit den Merkmalen des Patentanspruchs 9 gelöst. Vorteilhafte Ausgestaltungen mit zweckmäßigen Weiterbildungen der Erfindung sind in den abhängigen Patentansprüchen und in der nachfolgenden Beschreibung angegeben.

Bei dem erfindungsgemäßen Verfahren zum Betreiben eines Fahrerassistenzsystems eines Fahrzeugs berücksichtigt das Fahrerassistenzsystem eine Fahrgeschwindigkeit wenigstens eines Fremdfahrzeugs zumindest mittelbar, mit welcher das wenigstens eine Fremdfahrzeug eine in Fahrtrichtung des Fahrzeugs vor dem Fahrzeug angeordnete Kurve durchfahren hat. Eine von dem Fahrerassistenzsystem für ein Durchfahren der Kurve vorgesehene Fahrgeschwindigkeit des Fahrzeugs wird überprüft, und für dieses Überprüfen wird die Fahrgeschwindigkeit des wenigstens einen Fremdfahrzeugs zumindest mittelbar berücksichtigt.

Dem liegt die Erkenntnis zugrunde, dass die von dem Fahrerassistenzsystem für das Durchfahren der Kurve vorgesehene Fahrgeschwindigkeit möglicherweise nicht einer Fahrgeschwindigkeit entspricht, welche in Anbetracht einer tatsächlichen Durchfahrbarkeit der Kurve angebracht ist oder einem Fahrer des mit dem Fahrerassistenzsystem ausgestatteten Fahrzeugs angebracht scheint. Derartiges kann vorliegend berücksichtigt werden, weil für das Überprüfen der für das Durchfahren der Kurve vorgesehenen Fahrgeschwindigkeit die Fahrgeschwindigkeit des wenigstens einen Fremdfahrzeugs zumindest mittelbar herangezogen wird. Folglich ist ein verbessertes Verfahren zum Betreiben des Fahrerassistenzsystems bereitgestellt.

Im Anschluss an das Überprüfen der vorgesehenen Fahrgeschwindigkeit wird von dem Fahrerassistenzsystem entschieden, ob die vorgesehene Fahrgeschwindigkeit verringert oder beibehalten wird. Auf diese Weise kann ein verbessertes Fahrerlebnis beim Durchfahren der Kurve mit dem das Fahrerassistenzsystem aufweisenden Fahrzeug erreicht werden.

Dann, wenn die vorgesehene Fahrgeschwindigkeit beibehalten wird, wird eine querführende Komponente des Fahrerassistenzsystems deaktiviert. Dem liegt die Erkenntnis zugrunde, dass es ansonsten, also wenn die querführende Komponente des Fahrerassistenzsystems aktiv bleibt, zu einer für den Fahrer unerwünscht starken Verringerung der Fahrgeschwindigkeit durch das Fahrerassistenzsystem kommen könnte. Indem die querführende Komponente des Fahrerassistenzsystems deaktiviert wird, kann eine diesbezügliche Verwirrung des Fahrers sehr weitgehend vermieden werden.

Darüber hinaus beruht das Verfahren auf der Erkenntnis, dass ein Fahrerassistenzsystem mit einer querführenden Komponente regulatorischen Rahmenbedingungen unterliegt. Die querführende beziehungsweise eine Querführung des Fahrzeugs bewirkende Komponente des Fahrerassistenzsystems sorgt beispielsweise dafür, dass das Fahrzeug eine Fahrspur oder Fahrbahn nicht verlässt. Hierfür kann eine entsprechende Sensorik des Fahrzeugs beziehungsweise des Fahrerassistenzsystems Fahrbahnmarkierungen oder dergleichen erfassen.

Querführende Fahrerassistenzsysteme beziehungsweise die querführende Komponente eines Fahrerassistenzsystems betreffende Rahmenbedingungen sind unter anderem in der UN ECE R79 geregelt. In dieser Regelung ist beispielsweise eine maximale Querbeschleunigung angegeben, welche das mittels des querführenden Fahrerassistenzsystems eine Kurve durchfahrende Fahrzeug maximal haben darf. Wenn nun unter Berücksichtigung einer derartigen maximalen Querbeschleunigung des Fahrzeugs beim Durchfahren der Kurve von dem Fahrerassistenzsystem eine Fahrgeschwindigkeit vorgesehen wird, so kann diese vorgesehene Fahrgeschwindigkeit von der Fahrgeschwindigkeit abweichen, mit welcher das wenigstens eine Fremdfahrzeug die Kurve bereits durchfahren hat. Indem beispielsweise eine derartige Abweichung beim Überprüfen der vorgesehenen Fahrgeschwindigkeit berücksichtigt wird, kann von dem Fahrerassistenzsystem eine Anpassung der vorgesehenen Fahrgeschwindigkeit vorgenommen werden. Dies führt zu einem verbesserten Fahrerlebnis für den Fahrer, welcher mit dem das Fahrerassistenzsystem aufweisenden Fahrzeug die Kurve durchfährt.

Bei einer unmittelbaren Berücksichtigung der in einem jeweiligen Punkt der Kurve vorliegenden Fahrgeschwindigkeit des wenigstens einen Fremdfahrzeugs kann die Fahrgeschwindigkeit des wenigstens einen Fremdfahrzeugs direkt in die Überprüfung eingehen. Demgegenüber kann bei einer mittelbareren Berücksichtigung der Fahrgeschwindigkeit des wenigstens einen Fremdfahrzeugs ein mit der Fahrgeschwindigkeit des Fremdfahrzeugs korrelierender beziehungsweise aus dieser Fahrgeschwindigkeit abgeleiteter Parameter berücksichtigt werden, beispielsweise eine Querbeschleunigung. Die in einem jeweiligen Punkt der Kurve vorliegende Querbeschleunigung ist von der an diesem Punkt vorliegenden jeweiligen Fahrgeschwindigkeit des Fremdfahrzeugs und dem an dieser Stelle beziehungsweise diesem Punkt vorliegenden Kurvenradius abhängig. Sowohl das unmittelbare Berücksichtigen der Fahrgeschwindigkeit als auch das mittelbare Berücksichtigen der Fahrgeschwindigkeit über den wenigstens einen abgeleiteten Parameter lässt sich von dem Fahrerassistenzsystem technisch einfach durchführen.

Vorzugsweise berücksichtigt das Fahrerassistenzsystem jeweilige beim Durchfahren der Kurve vorliegende Fahrgeschwindigkeiten einer Vielzahl von Fremdfahrzeugen. Hierbei wird die vorgesehene Fahrgeschwindigkeit mit wenigstens einer Bezugsgeschwindigkeit verglichen, welche aus zumindest einem Teil der jeweiligen Fahrgeschwindigkeiten ermittelt wird. Aufgrund der Berücksichtigung derartiger Schwarmdaten, welche über das Fahrverhalten entsprechend vieler Fremdfahrzeuge Aufschluss geben, kann mit einer erhöhten Zuverlässigkeit festgestellt werden, ob die vorgesehene Fahrgeschwindigkeit für das Durchfahren der Kurve angebracht ist oder nicht.

Die wenigstens eine Bezugsgeschwindigkeit kann dem Fahrerassistenzsystem von einer fahrzeugexternen Speichereinrichtung wie etwa einem Server übermittelt werden. Dies macht das Verfahren besonders aufwandsarm.

Zusätzlich oder alternativ kann die Bezugsgeschwindigkeit durch das Fahrerassistenzsystem ermittelt werden, indem dem Fahrerassistenzsystem die jeweiligen Fahrgeschwindigkeiten der Fremdfahrzeuge übermittelt werden, welche die Fremdfahrzeuge beim Durchfahren der Kurve in jedem Punkt der Kurve hatten. Auf diese Weise kann das Fahrerassistenzsystem besonders gut darauf Einfluss nehmen, von welchen Fremdfahrzeugen die jeweiligen Fahrgeschwindigkeiten zum Ermitteln der wenigstens einen Bezugsgeschwindigkeit herangezogen werden sollen. Dies führt wiederum dazu, dass das Vergleichen der vorgesehenen Fahrgeschwindigkeit mit der wenigstens einen Bezugsgeschwindigkeit sehr gut geeignet oder passend für die Fahrsituation des das Fahrerassistenzsystem aufweisenden Fahrzeugs ist.

Bei der wenigstens einen Bezugsgeschwindigkeit kann es sich insbesondere um eine durchschnittliche Geschwindigkeit der Fremdfahrzeuge beim Durchfahren der Kurve handeln, also um die Durchschnittsgeschwindigkeit, welche die Fremdfahrzeuge in jedem Punkt der Kurve hatten. Eine derartige Bezugsgeschwindigkeit in Form eines Mittelwerts lässt sich besonders einfach ermitteln.

Insbesondere wenn Fremdfahrzeuge von einem Fahrer des jeweiligen Fremdfahrzeugs geführt durch die Kurve fahren, also ohne dass ein Fahrerassistenzsystem des jeweiligen Fremdfahrzeugs aktiv ist, können die jeweiligen Fahrgeschwindigkeiten der Fremdfahrzeuge vergleichsweise stark voneinander abweichen. Denn die Fahrgeschwindigkeit des jeweiligen Fremdfahrzeugs hängt dann lediglich davon ab, wie sportlich beziehungsweise wie vorsichtig oder defensiv der jeweilige Fahrer das Fremdfahrzeug durch die Kurve fährt. Wenn derartige, nicht durch ein Fahrerassistenzsystem geführte Fremdfahrzeuge beim Ermitteln der Bezugsgeschwindigkeit berücksichtigt werden, so kann dies zu einer ermittelten Bezugsgeschwindigkeit führen, welche für das Vergleichen mit der vorgesehenen Fahrgeschwindigkeit nur bedingt geeignet ist.

Vorzugsweise werden für das Ermitteln der wenigstens einen Bezugsgeschwindigkeit diejenigen Fremdfahrzeuge berücksichtigt, bei welchen beim Durchfahren der Kurve eine querführende Komponente eines Fahrerassistenzsystems des jeweiligen Fremdfahrzeugs aktiv war. Dann ist nämlich die Bezugsgeschwindigkeit für den Vergleich oder das Vergleichen mit der vorgesehenen Fahrgeschwindigkeit besonders aussagekräftigt. Denn wenn trotz der Aktivierung einer querführenden Komponente des Fahrerassistenzsystems des jeweiligen Fremdfahrzeugs die Kurve problemlos mit einer anderen Fahrgeschwindigkeit als der vorgesehenen Fahrgeschwindigkeit durchfahren werden konnte, dann ist auch eine etwaige Anpassung der vorgesehenen Fahrgeschwindigkeit unproblematisch. Dies liegt daran, dass die Bezugsgeschwindigkeit bei aktivierter beziehungsweise aktiver querführender Komponente bereits beim Durchfahren der Kurve mittels des Fremdfahrzeugs ihre Tauglichkeit unter Beweis gestellt hat.

Vorzugsweise berücksichtigt das Fahrerassistenzsystem zum Ermitteln der wenigstens einen Bezugsgeschwindigkeit eine Version der querführenden Komponente des Fahrerassistenzsystems. Dem liegt die Erkenntnis zugrunde, dass in unterschiedlichen Versionen der querführenden Komponente unterschiedliche zulässige Querbeschleunigungen des Fremdfahrzeugs beim Durchfahren der Kurve hinterlegt oder implementiert sein können. Beispielsweise kann bei einer ersten Version der querführenden Komponente eine niedrigere Querbeschleunigung zulässig gewesen sein als bei einer zweiten, insbesondere nachfolgenden Version der querführenden Komponente. Wenn auch die zweite Version der querführenden Komponente ein durch das Fahrerassistenzsystem quergeführtes Durchfahren der Kurve zulässt, so kann dies bei einer etwaigen Anpassung der vorgesehenen Fahrgeschwindigkeit in vorteilhafter Weise berücksichtigt werden.

Als weiter vorteilhaft hat es sich gezeigt, wenn das Fahrerassistenzsystem zum Ermitteln der wenigstens einen Bezugsgeschwindigkeit ein Fahrzeugmodell des jeweiligen Fremdfahrzeugs berücksichtigt. Dies führt dazu, dass die vorgesehene Fahrgeschwindigkeit besonders gut mit der Bezugsgeschwindigkeit vergleichbar ist, weil beispielsweise mit dem Modell des Fahrzeugs baugleiche Fahrzeugmodelle der Fremdfahrzeuge für die Ermittlung der Bezugsgeschwindigkeit herangezogen werden können.

Das Fahrerassistenzsystem kann die Fahrgeschwindigkeit des wenigstens einen Fremdfahrzeugs mittelbar berücksichtigen, indem für das Überprüfen der vorgesehenen Fahrgeschwindigkeit eine Querbeschleunigung des wenigstens einen Fremdfahrzeugs beim Durchfahren der Kurve mit einem vorbestimmten Grenzwert der Querbeschleunigung verglichen wird. Indem die Querbeschleunigung beim Überprüfen der vorgesehenen Fahrgeschwindigkeit herangezogen wird, kann von dem Fahrerassistenzsystem in vorteilhafter Weise einfach festgestellt werden, ob eine Anpassung der vorgesehenen Fahrgeschwindigkeit vorgenommen werden sollte.

In analoger Weise kann für das Überprüfen der vorgesehenen Fahrgeschwindigkeit eine Querbeschleunigung, welche sich infolge der vorgesehenen Fahrgeschwindigkeit beim Durchfahren der Kurve unter Berücksichtigung eines Fahrwegs des wenigstens einen Fremdfahrzeugs einstellt, mit dem vorbestimmten Grenzwert der Querbeschleunigung verglichen werden.

Wenn ein solcher Vergleich ergibt, dass eine Abweichung von dem Grenzwert, insbesondere ein Überschreiten des Grenzwerts, vorliegt, so kann eine entsprechende Anpassung der vorgesehenen Fahrgeschwindigkeit vorgenommen werden.

Vorzugsweise wird die Querbeschleunigung unter Heranziehung einer Vielzahl von Fremdfahrzeugen ermittelt. Dann ist die zum Vergleich mit dem vorbestimmten Grenzwert herangezogene Querbeschleunigung besonders aussagekräftig.

Vorzugsweise werden hierbei insbesondere diejenigen Fremdfahrzeuge berücksichtigt, bei welchen beim Durchfahren der Kurve eine querführende Komponente eines Fahrerassistenzsystems des jeweiligen Fremdfahrzeugs aktiv war. Denn dann ist sichergestellt, dass diejenigen Fremdfahrzeuge beim Ermitteln der Querbeschleunigung berücksichtigt werden, welche sich für den Vergleich besonders gut eignen.

Vorzugsweise berücksichtigt das Fahrerassistenzsystem hierbei eine Version der querführenden Komponente des Fahrerassistenzsystems und/oder ein jeweiliges Fahrzeugmodell der Fremdfahrzeuge. Dies führt zu einer verbesserten Aussagekraft der mit dem vorbestimmten Grenzwert zu vergleichenden Querbeschleunigung der Fremdfahrzeuge oder der bei der vorgesehenen Fahrgeschwindigkeit vorliegenden Querbeschleunigung.

Die Querbeschleunigung des wenigstens einen Fremdfahrzeugs kann dem Fahrerassistenzsystem von einer fahrzeugexternen Speichereinrichtung übermittelt werden, beispielsweise von einem Server, auf welchem Schwarmdaten wie etwa die Querbeschleunigung einer Vielzahl von Fremdfahrzeugen abgelegt sind. Dies geht mit einem besonders geringen Aufwand einher, da dem Fahrerassistenzsystem die Querbeschleunigung direkt zur Verfügung gestellt wird.

In analoger Weise kann die wenigstens eine Bezugsgeschwindigkeit dem Fahrerassistenzsystem von der fahrzeugexternen Speichereinrichtung übermittelt werden. Hier gelten die zu dem direkten Übermitteln der Querbeschleunigung genannten Vorteile in entsprechender Weise.

Zusätzlich oder alternativ kann das Fahrerassistenzsystem die Querbeschleunigung des wenigstens einen Fremdfahrzeugs basierend auf einem Fahrweg des wenigstens einen Fremdfahrzeugs beim Durchfahren der Kurve und der entlang des Fahrwegs vorliegenden Fahrgeschwindigkeit des wenigstens eines Fahrzeugs ermitteln. Dann werden dem Fahrerassistenzsystem lediglich die Schwarmdaten in Form des Fahrwegs und der entlang des Fahrwegs vorliegenden Fahrgeschwindigkeit als Rohdaten bereitgestellt, und das Fahrerassistenzsystem ermittelt aus diesen Angaben die Querbeschleunigung. So kann insbesondere das Fahrerassistenzsystem darauf Einfluss nehmen, von welchen Fremdfahrzeugen die Querbeschleunigung berücksichtigt werden soll. Dies ermöglicht eine besonders realitätsgetreue beziehungsweise besonders gut an die Umstände angepasste Veränderung beziehungsweise Anpassung oder ein Beibehalten der vorgesehenen Fahrgeschwindigkeit basierend auf der Querbeschleunigung.

Vorzugsweise wird basierend auf dem Vergleich der Querbeschleunigung mit dem Grenzwert eine von der vorgesehenen Fahrgeschwindigkeit abweichende Alternativgeschwindigkeit bestimmt. Hierbei wird von dem Fahrerassistenzsystem eine Abweichung der Alternativgeschwindigkeit von der vorgesehenen Fahrgeschwindigkeit beurteilt. Aufgrund dieser Beurteilung kann das Fahrerassistenzsystem darauf Einfluss nehmen, ob das Fahrerassistenzsystem als beim Durchfahren der Kurve eingestellte Längsgeschwindigkeit des Fahrzeugs die Alternativgeschwindigkeit anstelle der vorgesehenen Fahrgeschwindigkeit verwenden soll oder nicht.

Bei der Beurteilung kann insbesondere berücksichtigt werden, inwieweit für einen Fahrer des das Fahrerassistenzsystem aufweisenden Fahrzeugs die Alternativgeschwindigkeit als beim Durchfahren der Kurve angebracht eingeschätzt werden wird. So kann eine besonders hohe Akzeptanz bei einem Umsetzen der Alternativgeschwindigkeit erreicht werden.

Vorzugsweise wird an einen Fahrer des Fahrzeugs infolge des Überprüfens wenigstens ein Hinweis ausgegeben. Der an den Fahrer ausgegebene wenigstens eine Hinweis kann eine Aufforderung beinhalten, eine Querführung des Fahrzeugs zu übernehmen. Dementsprechend kann der Fahrer durch das Ausgeben des wenigstens einen Hinweises beispielsweise aufgefordert werden, mit wenigstens einer Hand, insbesondere mit beiden Händen, eine insbesondere als Lenkrad ausgebildete Lenkhandhabe des Fahrzeugs zu ergreifen. Wenn der Fahrer bereits die Lenkhandhabe mit wenigstens einer Hand ergriffen hat, so kann der Fahrer durch das Ausgeben des Hinweises darauf aufmerksam gemacht werden, dass die Querführung des Fahrzeugs nun dem Fahrer übertragen wird. Insbesondere kann dann die von dem Fahrerassistenzsystem vorgesehene Fahrgeschwindigkeit beibehalten werden, wobei allein der Fahrer die Querführung des Fahrzeugs übernimmt, während durch das Fahrerassistenzsystem die Fahrgeschwindigkeit in Form der Längsgeschwindigkeit eingestellt wird, insbesondere geregelt wird.

Die Aufforderung kann in einer Mehrzahl von Warnstufen ausgegeben werden. Diese Warnstufen können nacheinander oder kumulativ zum Einsatz kommen, sofern der Fahrer auf eine jeweils vorangegangene Warnstufe nicht wie gewünscht reagiert. So kann besonders zuverlässig erreicht werden, dass der Fahrer tatsächlich die Querführung des Fahrzeugs übernimmt. Die Aufforderung kann als Text und/oder als Sprachnachricht und/oder eine Form einer Vibration der Lenkhandhabe oder dergleichen ausgegeben werden. Insbesondere können diese Arten des Ausgebens des Hinweises die einzelnen Warnstufen bilden, welche nacheinander oder kumulativ eingesetzt werden können.

Zusätzlich oder alternativ kann der an den Fahrer ausgegebene wenigstens eine Hinweis ein Kommunizieren einer von der vorgesehenen Fahrgeschwindigkeit abweichenden Alternativgeschwindigkeit beinhalten. Es kann also der Fahrer darüber informiert werden, dass das Fahrerassistenzsystem anstelle der vorgesehenen Fahrgeschwindigkeit das Kraftfahrzeug mit der Alternativgeschwindigkeit durch die Kurve zu fahren beabsichtigt. Dies trägt dazu bei, dass der Fahrer nicht dadurch verwirrt wird, wenn das Kraftfahrzeug dann mit der Alternativgeschwindigkeit die Kurve durchfährt.

Insbesondere kann vorgesehen sein, dass die von der vorgesehenen Fahrgeschwindigkeit abweichende Alternativgeschwindigkeit von dem Fahrer bestätigbar ist, also von dem Fahrer bestätigt werden kann. Beispielsweise kann also das Fahrerassistenzsystem dem Fahrer vorschlagen, nicht mit der ursprünglich vorgesehenen Fahrgeschwindigkeit, sondern mit einer demgegenüber verringerten Alternativgeschwindigkeit die Kurve zu durchfahren. Indem der Fahrer dies bestätigt, erklärt der Fahrer somit sein Einverständnis mit diesem Verringern der Fahrgeschwindigkeit. Auch auf diese Weise ist erreichbar, dass es zu keiner Verwirrung des Fahrers kommt, wenn dann die Kurve mit der Alternativgeschwindigkeit durchfahren wird.

Das erfindungsgemäße Fahrzeug weist ein Fahrerassistenzsystem auf. Hierbei ist das Fahrerassistenzsystem dazu ausgebildet, eine Fahrgeschwindigkeit wenigstens eines Fremdfahrzeugs zumindest mittelbar zu berücksichtigen, mit welcher das wenigstens eine Fremdfahrzeug eine in Fahrtrichtung des Fahrzeugs vor dem Fahrzeug angeordnete Kurve durchfahren hat. Das Fahrerassistenzsystem ist weiter dazu ausgebildet, eine von dem Fahrerassistenzsystem für ein Durchfahren der Kurve vorgesehene Fahrgeschwindigkeit des Fahrzeugs zu überprüfen und für dieses Überprüfen die Fahrgeschwindigkeit des wenigstens einen Fremdfahrzeugs zumindest mittelbar zu berücksichtigen. Das Fahrerassistenzsystem ist dazu ausgebildet, im Anschluss an das Überprüfen der vorgesehenen Fahrgeschwindigkeit zu entscheiden, ob die vorgesehene Fahrgeschwindigkeit verringert oder beibehalten wird. Das Fahrerassistenzsystem ist dazu ausgebildet, dann, wenn die vorgesehene Fahrgeschwindigkeit beibehalten wird, eine querführende Komponente des Fahrerassistenzsystems zu deaktivieren. Das Fahrzeug mit dem Fahrerassistenzsystem ist somit zur Durchführung des erfindungsgemäßen Verfahrens ausgebildet. Folglich weist das Fahrzeug ein verbessertes Fahrerassistenzsystem auf.

Die für das erfindungsgemäße Verfahren beschriebenen Vorteile und bevorzugten Ausführungsformen gelten auch für das erfindungsgemäße Fahrzeug und umgekehrt.

Zu der Erfindung gehören demnach auch Weiterbildungen des erfindungsgemäßen Fahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Fahrzeugs hier nicht noch einmal beschrieben.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: eine Situation, in welcher ein mit einem Fahrerassistenzsystem ausgestattetes Fahrzeug auf eine Kurve zufährt, wobei dem Fahrerassistenzsystem Schwarmdaten übermittelt werden; und
- Fig. 2: ein Ablaufdiagramm, welches Möglichkeiten der Nutzung der Schwarmdaten zum Anpassen einer vorgesehenen beziehungsweise prädizierten Längsgeschwindigkeit des Fahrzeugs veranschaulicht.

Bei den im Folgenden erläuterten Ausführungsbeispielen handelt es sich um bevorzugte Ausführungsbeispiele der Erfindung.

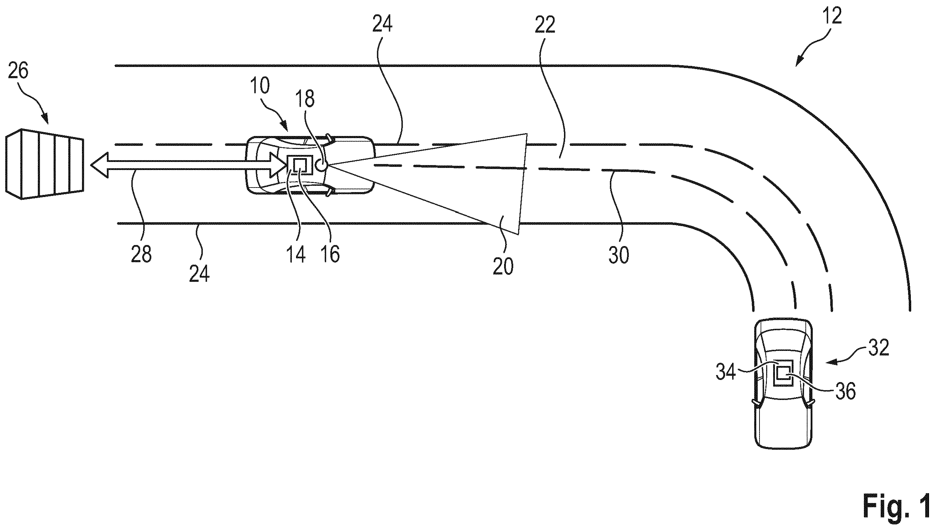

In den Figuren sind funktionsgleiche Elemente jeweils mit denselben Bezugszeichen versehen. In Fig. 1 ist stark schematisiert eine Situation gezeigt, in welcher ein Fahrzeug 10, welches vorliegend als Kraftfahrzeug etwa in Form eines Personenkraftwagens ausgebildet ist, auf eine Kurve 12 zufährt. Das Fahrzeug 10 weist ein Fahrerassistenzsystem 14 auf, welches in Fig. 1 lediglich stark schematisiert dargestellt ist. Das Fahrerassistenzsystem 14 kann für eine Längsführung des Fahrzeugs 10 sorgen und hierbei beispielsweise eine von einem (nicht gezeigten) Fahrer des Fahrzeugs 10 eingestellte oder gesetzte Längsgeschwindigkeit beibehalten, welche auch als Setzgeschwindigkeit bezeichnet wird. Insbesondere kann das Fahrerassistenzsystem 14 hierbei einen Abstand zu einem vorausfahrenden (vorliegend nicht gezeigten) weiteren Fahrzeug berücksichtigen und entsprechend das Fahrzeug 10 verlangsamen, wenn dieser Abstand einen vorbestimmten Grenzwert zu unterschreiten droht. Des Weiteren können dem Fahrerassistenzsystem 14 über ein (vorliegend nicht gezeigtes) Navigationssystem des Fahrzeugs 10 Navigationsdaten zur Verfügung gestellt werden. Anhand derartiger Navigationsdaten kann der Radius der Kurve 12 vergleichsweise grob bestimmt werden.

Wenn die von dem Fahrer eingestellte Fahrgeschwindigkeit oder Setzgeschwindigkeit aufgrund des Radius der Kurve 12 nicht beibehalten werden kann, so kann das längsführende Fahrerassistenzsystem 14 diese Setzgeschwindigkeit entsprechend verringern. Dies kann auch dann geschehen, wenn wie oben erläutert ein Mindestabstand zu einem vorausfahrenden Fahrzeug oder dergleichen Verkehrsteilnehmer eingehalten werden soll.

Zum Zwecke der Längsführung des Fahrzeugs 10 kann das Fahrzeug 10 wenigstens einen (vorliegend nicht gezeigten) Sensor etwa in Form eines Radarsensors oder dergleichen aufweisen, mittels welchem beispielsweise der Abstand zu einem vorausfahrenden Fahrzeug erfasst werden kann.

Das Fahrerassistenzsystem 14 weist vorliegend auch eine querführende Komponente 16 auf, welche in Fig. 1 ebenfalls lediglich stark schematisiert veranschaulicht ist. Für die Querführung des Fahrzeugs 10, welche mittels der querführenden Komponente 16 des Fahrerassistenzsystems 14 bewerkstelligt wird, kann das Fahrzeug 10 wie vorliegend beispielhaft gezeigt einen Sensor wie etwa eine Kamera 18 aufweisen. Mittels der Kamera 18 kann ein Bereich 20 detektiert beziehungsweise erfasst werden, welcher sich in Fahrtrichtung des Fahrzeugs 10 vor dem Fahrzeug 10 befindet. Insbesondere kann mittels der Kamera 18 erfasst werden, ob das Fahrzeug 10 eine Fahrspur 22 verlässt, welche gemäß Fig. 1 mittels Fahrbahnmarkierungen 24 seitlich begrenzt ist. Die querführende Komponente 16 des Fahrerassistenzsystems 14 sorgt dann, wenn diese aktiviert oder aktiv ist, dafür, dass das Fahrzeug 10 die Fahrspur 22 nicht verlässt.

Das Fahrerassistenzsystem 14 des Fahrzeugs 10 ist vorliegend weiter dazu ausgebildet, Schwarmdaten zu empfangen, welche von einer fahrzeugexternen Einrichtung beispielsweise in Form eines in Fig. 1 schematisch gezeigten Servers 26 bereitgestellt werden können. Das Übermitteln von Daten an den Server 26 etwa durch das Fahrzeug 10 und das Empfangen von Daten, insbesondere von Schwarmdaten, von dem Server 26 durch das Fahrzeug 10 ist in Fig. 1 durch einen Doppelpfeil 28 veranschaulicht.

Vorliegend kann das Fahrerassistenzsystem 14 derart ausgebildet sein, dass beim Aktivieren des Fahrerassistenzsystems 14 durch den Fahrer des Fahrzeugs 10 zugleich die Längsführung und die von der querführenden Komponente 16 bewerkstelligte Querführung aktiviert sind beziehungsweise aktiv sind. Für querführende Fahrerassistenzsysteme beziehungsweise für die querführende Komponente 16 des Fahrerassistenzsystems 14 sind regulatorische Rahmenbedingungen zu beachten, welche etwa in der UN ECE R79 festgehalten sind.

Beispielsweise ist in dieser Regelung eine maximal erlaubte Querbeschleunigung für das Fahrzeug 10 angegeben, wenn das Fahrzeug 10 mit aktivierter querführender Komponente 16 fortbewegt wird und insbesondere die Kurve 12 durchfährt. Beispielsweise kann diese maximal erlaubte Querbeschleunigung bei 3 m/s² liegen. Es kann vorkommen, dass das Fahrerassistenzsystem 14 die Fahrgeschwindigkeit des Fahrzeugs 10 beim Durchfahren der Kurve 12 verringert, um diese maximal erlaubte Querbeschleunigung nicht zu überschreiten. Dies kann insbesondere dazu führen, dass das Fahrzeug 10 deutlich stärker beim Durchfahren der Kurve 12 verlangsamt wird, als dies aufgrund des Kurvenradius erforderlich wäre oder angebracht wäre. Derartiges kann mittels des Fahrerassistenzsystems 14 vermieden werden, wie nachfolgend erläutert wird.

Das Fahrerassistenzsystem 14 überprüft nämlich die für das Durchfahren der Kurve 12 vorgesehene Fahrgeschwindigkeit und berücksichtigt hierbei Schwarmdaten, welche dem Fahrerassistenzsystem 14 beispielsweise von dem Server 26 zur Verfügung gestellt werden. Die Schwarmdaten können einen Fahrweg 30 angeben, welcher in Fig. 1 schematisch dargestellt ist. Entlang dieses Fahrwegs 30 hat wenigstens ein Fremdfahrzeug 32, welches in Fig. 1 ebenfalls schematisch dargestellt ist, zeitlich vor dem Fahrzeug 10 die Kurve 12 durchfahren.

Tatsächlich ist der Fahrweg 30 vorzugsweise aus einer Vielzahl einzelner Fahrwege gebildet, entlang derer eine Vielzahl von Fremdfahrzeugen 32 die Kurve 12 bereits durchfahren haben. Beispielsweise kann dieser durchschnittliche Fahrweg 30 bestimmt werden, indem von den Fremdfahrzeugen 32 an den Server 26 übermittelte Bilddaten ausgewertet werden. Bei den Bilddaten kann es sich beispielsweise um Kameradaten handeln, welche mittels einer (nicht gezeigten) Kamera des jeweiligen Fremdfahrzeugs 32 aufgenommen und an den Server 26 übermittelt wurden.

Anhand der den Fahrweg 30 angebenden Schwarmdaten lässt sich der tatsächliche Radius der Kurve 12 deutlich genauer bestimmen als dies anhand der Navigationsdaten beziehungsweise Kartendaten der Fall ist, welche in dem (nicht gezeigten) Navigationssystem des Fahrzeugs 10 vorhanden sind.

Des Weiteren umfassen die Schwarmdaten eine Fahrgeschwindigkeit des jeweiligen Fremdfahrzeugs 32 beim Durchfahren der Kurve 12. Es kann somit für jeden Punkt entlang des Fahrwegs 30 die mit diesem Punkt korrespondierende beziehungsweise in diesem Punkt vorliegende Fahrgeschwindigkeit des jeweiligen Fremdfahrzeugs 32 von dem Server 26 ermittelt und dem Fahrerassistenzsystem 14 des Fahrzeugs 10 zur Verfügung gestellt werden.

Die Schwarmdaten enthalten somit insbesondere die Information, wie schnell eine Vielzahl weiterer Fremdfahrzeuge 32 bereits durch die Kurve 12 gefahren sind. Insbesondere können die Schwarmdaten somit beinhalten, mit welcher durchschnittlichen Geschwindigkeit die Fremdfahrzeuge 32 die Kurve 12 entlang des durchschnittlichen Fahrwegs 30 durchfahren haben.

Aus den Angaben der Fahrgeschwindigkeit in jedem Punkt des Fahrwegs 30 und dem Kurvenradius kann sehr präzise die in jedem Punkt der Kurve 12 auf die Fremdfahrzeuge 32 durchschnittlich wirkende Querbeschleunigung ermittelt werden, insbesondere durch den Server 26 ermittelt werden.

Der Server 26 kann dem Fahrerassistenzsystem 14 des Fahrzeugs 10 vor dem Einfahren in die Kurve 12 die Rohdaten in Form der Fahrgeschwindigkeiten der Fremdfahrzeuge 32 und des durchschnittlichen Fahrwegs 30 der Fremdfahrzeuge 32 übermitteln. Aus diesen Rohdaten kann dann durch das Fahrerassistenzsystem 14 die in dem jeweiligen Punkt entlang des Fahrwegs 30 vorliegende Querbeschleunigung der Fremdfahrzeuge 32 bestimmt werden. Es ist jedoch auch möglich, dass der Server 26 dem Fahrzeug 10 bereits die anhand der Fahrgeschwindigkeit der Fremdfahrzeuge 32 und des tatsächlichen Radius der Kurve 12 bestimmte jeweilige Querbeschleunigung entlang des Fahrwegs 30 übermittelt.

Stellt sich etwa heraus, dass die Fremdfahrzeuge 32 die Kurve 12 durchschnittlich mit einer höheren Fahrgeschwindigkeit durchfahren haben als dies von dem Fahrerassistenzsystem 14 vorgesehen ist, so kann die von dem Fahrerassistenzsystem 14 bei aktiver querführenden Komponente 16 für das Durchfahren der Kurve 12 vorgesehene oder prädizierte Fahrgeschwindigkeit beziehungsweise Längsgeschwindigkeit angepasst werden. Insbesondere kann das Fahrzeug 10 mittels des Fahrerassistenzsystems 14 mit einer höheren vorgesehenen Längsgeschwindigkeit durch die Kurve 12 geführt werden, als dies der Fall wäre, wenn die querführende Komponente 16 des Fahrerassistenzsystems 14 aktiv ist beziehungsweise aktiviert ist.

Von dem Fahrerassistenzsystem 14 kann weiter berücksichtigt werden, ob die Fremdfahrzeuge 32 mittels eine Fahrerassistenzsystems 34 durch die Kurve 12 geführt wurden, bei welchem eine querführende Komponente 36 aktiv war beziehungsweise aktiviert war. Denn dies ermöglicht die Feststellung, dass auch bei einer aktiven Querführung des Fremdfahrzeugs 32 möglicherweise eine maximale Querbeschleunigung des Fremdfahrzeugs 32 erreicht wurde, welche zwar die regulatorischen Rahmenbedingungen beachtet, jedoch höher liegt als die Querbeschleunigung, welche von der querführenden Komponente 16 des Fahrerassistenzsystems 14 zugelassen wird, welches das auf die Kurve 12 zufahrende Fahrzeug 10 aufweist.

Insbesondere kann es zu einer derartigen Konstellation kommen, wenn auch die jeweilige Version des Fahrerassistenzsystems 34 des Fremdfahrzeugs 32 und insbesondere der querführenden Komponente 36 dieses Fahrerassistenzsystems 34 berücksichtigt wird. Wenn beispielsweise eine aktuellere Version der querführenden Komponente 36 des Fremdfahrzeugs 32 eine höhere Querbeschleunigung zulässt als die (ältere) Version der querführenden Komponente 16 des Fahrzeugs 10, so kann dies beim Vorgeben der Längsgeschwindigkeit beziehungsweise der für das Durchfahren der Kurve 12 prädizierten oder vorgesehenen Fahrgeschwindigkeit des Fahrzeugs 10 berücksichtigt werden. Dementsprechend kann bei einer derartigen Konstellation von dem Fahrerassistenzsystem 14 des Fahrzeugs 10 eine höhere Fahrgeschwindigkeit für das Durchfahren der Kurve 12 vorgesehen werden, als dies aufgrund der Version der querführenden Komponente 16 eigentlich oder ursprünglich vorgesehen wäre.

Die Setzgeschwindigkeit, also die von dem Fahrerassistenzsystem 14 des Fahrzeugs 10 vorgesehene Fahrgeschwindigkeit beim Durchfahren der Kurve 12 kann somit etwa auf der Basis von Schwarmdaten angepasst werden.

Hierbei kann insbesondere ein jeweiliges Fahrzeugmodell des Fremdfahrzeugs 32 berücksichtigt werden. Denn wenn beispielsweise ein Fremdfahrzeug 32, welches mit dem Fahrzeug 10 baugleich ist, bei aktivierter querführender Komponente 36 mit einer höheren Fahrgeschwindigkeit durch die Kurve 12 fährt als dies von dem Fahrerassistenzsystem 14 bei aktivierter zugehöriger querführender Komponente 16 vorgesehen ist, so kann eine entsprechende Anpassung der vorgesehenen Fahrgeschwindigkeit beziehungsweise Längsgeschwindigkeit des Fahrzeugs 10 von dem Fahrerassistenzsystem 14 vorgenommen werden. Zusätzlich oder alternativ kann somit die Setzgeschwindigkeit beziehungsweise die von dem Fahrerassistenzsystem 14 vorgesehene Fahrgeschwindigkeit des Fahrzeugs 10 beim Durchfahren der Kurve 12 auf der Basis des jeweiligen Fahrzeugmodells der Fremdfahrzeuge 32 adaptiert beziehungsweise angepasst werden.

Als weiteren Aspekt kann das Fahrerassistenzsystem 14 berücksichtigen, inwieweit der Fahrer des Fahrzeugs 10 beispielsweise eine Verringerung der Fahrgeschwindigkeit des Fahrzeugs 10 beim Durchfahren der Kurve 12 zu akzeptieren gewillt ist. Die Verringerung der Fahrgeschwindigkeit kann hierbei dadurch bedingt sein, dass die querführende Komponente 16 des Fahrerassistenzsystems 14 beim Querführen des Fahrzeugs 10 dafür sorgt, dass eine bestimmte Querbeschleunigung nicht überschritten wird. Insbesondere wenn diese, von der querführenden Komponente 16 zugelassene Querbeschleunigung jedoch geringer ist als die Querbeschleunigung, welche die querführende Komponente 36 der Fremdfahrzeuge 32 für dem Fahrzeug 10 baugleiche Modelle der Fremdfahrzeuge 32 zulässt, kann diese Akzeptanz vergleichsweise gering sein. Wenn daher das Fahrerassistenzsystem 14 die Akzeptanz des Fahrers bei der Anpassung der Setzgeschwindigkeit beziehungsweise der vorgesehenen Fahrgeschwindigkeit des Fahrzeugs 10 berücksichtigt, kann dies zu einem verbesserten Fahrerlebnis für den Fahrer des Fahrzeugs 10 beim Durchfahren der Kurve 12 führen.

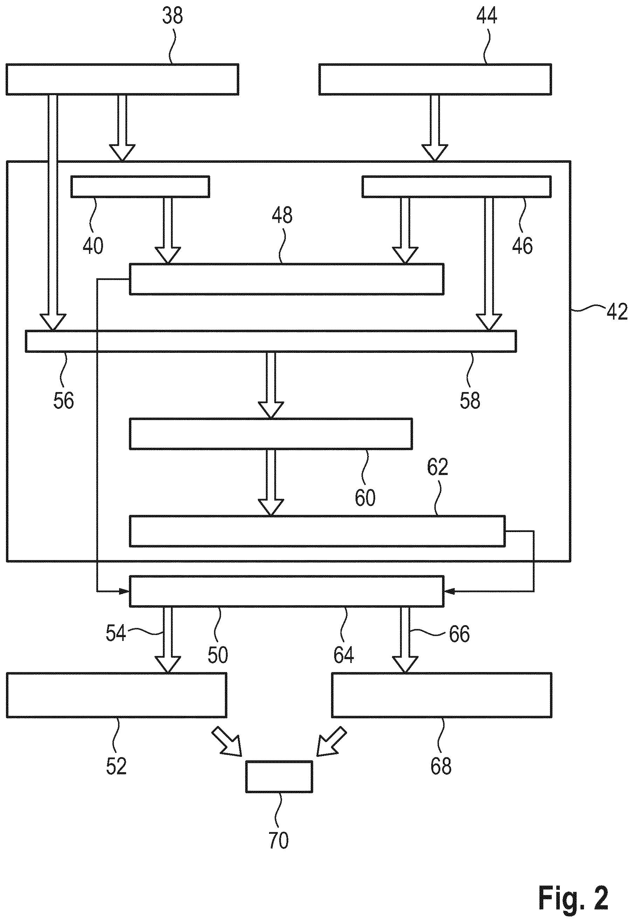

Mögliche Vorgehensweisen bei der Implementierung entsprechender Verfahren in das Fahrerassistenzsystem 14 sollen mit Bezug auf Fig. 2 erläutert werden.

Beispielsweise können gemäß Fig. 2 dem Fahrerassistenzsystem 14 des Fahrzeugs 10 Daten 38 zugeführt werden, welche den Fahrweg 30 der Fremdfahrzeuge 32 angeben. Insbesondere derartige Schwarmdaten können demnach von dem Fahrerassistenzsystem 14 berücksichtigt werden. Dem Fahrerassistenzsystem 14 etwa von dem Server 26 übermittelte Schwarmdaten können zudem eine durchschnittliche Fahrgeschwindigkeit 40 beinhalten, welche die Fremdfahrzeuge 32 beim Durchfahren der Kurve 12 in einem jeweiligen Punkt entlang des Fahrwegs 30 hatten.

Des Weiteren kann in einen in Fig. 2 schematisch gezeigten Entscheidungsblock 42 eine Fahrgeschwindigkeit 44 eingehen, welche das Fahrzeug 10 aufweist, wenn es auf die Kurve 12 zufährt. Bei dieser Fahrgeschwindigkeit 44 kann es sich um die vom Fahrer des Fahrzeugs 10 gefahrene Geschwindigkeit handeln, welche das Fahrzeug 10 in dem Moment aufweist, in welchem der Fahrer des Fahrzeugs 10 das Fahrerassistenzsystem 14 aktiviert hat. Unter Berücksichtigung dieser Fahrgeschwindigkeit 44 ermittelt das aktivierte Fahrerassistenzsystem 14 eine für das Durchfahren der Kurve 12 vorgesehene Fahrgeschwindigkeit 46 in Form einer prädizierten Längsgeschwindigkeit des Fahrzeugs 10.

In einem Vergleichsschritt 48 wird nun beispielsweise überprüft, ob die prädizierte Längsgeschwindigkeit beziehungsweise vorgesehene Fahrgeschwindigkeit 46 größer ist als die Schwarmgeschwindigkeit oder durchschnittliche Fahrgeschwindigkeit 40 der Fremdfahrzeuge 32 beim Durchfahren der Kurve 12. Insbesondere kann hierbei berücksichtigt werden, welches Fahrzeugmodell die Fremdfahrzeuge 32 aufwiesen und ob die Fremdfahrzeuge 32 das Fahrerassistenzsystem 34 mit der querführenden Komponente 36 hatten (vergleiche Fig. 1).

In einem nachfolgenden Schritt wird ein Resultat 50 des Vergleichsschritts 48 betrachtet. Lautet das Resultat 50, das die vorgesehene Fahrgeschwindigkeit 46 größer ist als die durchschnittliche Schwarmgeschwindigkeit der Fremdfahrzeuge 32, insbesondere derjenigen Fremdfahrzeuge 32, welche in Bezug auf das Fahrzeugmodell baugleich mit dem Fahrzeug 10 sind und zudem die aktivierte querführende Komponente 36 aufwiesen, so kommt es zu einem Verringern 52 der prädizierten Längsgeschwindigkeit, also der vorgesehenen Fahrgeschwindigkeit 46. Ein entsprechender Weg von dem Resultat 50 zu dem Verringern 52 ist in Fig. 2 durch einen Pfeil 54 veranschaulicht.

Gemäß Fig. 2 können die Schwarmdaten des Weiteren eine von der durchschnittlichen Fahrgeschwindigkeit 40 der Fremdfahrzeuge 32 abhängige Querbeschleunigung 56 entlang des Fahrwegs 30 umfassen. Die Querbeschleunigung 56 kann dem Fahrerassistenzsystem 14 direkt von dem Server 26 zur Verfügung gestellt werden (vergleiche Fig. 1). Zusätzlich oder alternativ kann die Querbeschleunigung 56 von dem Fahrerassistenzsystem 14 basierend auf den Schwarmdaten in Form der Fahrgeschwindigkeit 40 und der Daten 38 ermittelt werden, welche den Fahrweg 30 angeben.

In analoger Weise kann eine Querbeschleunigung 58 von dem Fahrerassistenzsystem 14 ermittelt werden, insbesondere berechnet werden, welche sich unter Berücksichtigung der den Fahrweg 30 angebenden Daten 38 beim Durchfahren der Kurve 12 mit der vorgesehenen Fahrgeschwindigkeit 46 einstellen wird.

In einem anschließenden Vergleich 60 kann geprüft werden, ob die Querbeschleunigung 56 oder die Querbeschleunigung 58 größer ist als ein vorbestimmter Grenzwert. Der vorbestimmte Grenzwert kann insbesondere eine gewisse Toleranz umfassen. Beispielsweise kann geprüft werden, ob die Querbeschleunigung 56, 58 größer ist als der vorbestimmte Grenzwert als solcher oder größer ist als der vorbestimmte Grenzwert inklusive der Toleranz, also größer ist als ein um die Toleranz erhöhter Basiswert. Bei dem vorbestimmten Grenzwert kann es sich insbesondere um einen aufgrund einer zu beachtenden Regelung einzuhaltenden Grenzwert handeln.

Ergibt der Vergleich 60, dass die Querbeschleunigung 56, 58 den vorbestimmten Grenzwert überschreitet, so wird von dem Fahrerassistenzsystem 14 in dem Entscheidungsblock 42 eine von der vorgesehenen Fahrgeschwindigkeit 46 abweichende Alternativgeschwindigkeit bestimmt. In einem nachfolgenden Beurteilungsschritt 62 wird vorzugsweise geprüft beziehungsweise beurteilt, ob eine entsprechende Abweichung der Alternativgeschwindigkeit von der ursprünglich vorgesehenen Fahrgeschwindigkeit 46 für den Fahrer des Fahrzeugs 10 akzeptabel ist.

Beispielsweise kann eine Längsführungskomponente des Fahrerassistenzsystems 14 des Fahrzeugs 10 eine Fahrgeschwindigkeit 46 für das Durchfahren der Kurve vorsehen, bei welcher eine höhere Querbeschleunigung 58 auftritt, als gemäß dem vorbestimmten Grenzwert zulässig wäre. Die unter Berücksichtigung des Grenzwerts und somit unter Heranziehung der querführenden Komponente 16 ermittelte Alternativgeschwindigkeit ist demgegenüber geringer. In dem Beurteilungsschritt 62 kann dann beurteilt oder geprüft werden, ob eine Abweichung der Alternativgeschwindigkeit von der vorgesehenen Fahrgeschwindigkeit 46 nach unten zugelassen werden soll. In dem Beurteilungsschritt 62 kann insbesondere berücksichtigt werden, welche Abweichung der Alternativgeschwindigkeit von der vorgesehenen Fahrgeschwindigkeit 46 der Fahrer des Fahrzeugs 10 zu akzeptieren bereit ist.

Auch von dem Beurteilungsschritt 62 gelangt das Verfahren zu einem Resultat 64 analog dem Resultat 50. Ergibt die Beurteilung, dass die Abweichung der Alternativgeschwindigkeit von der vorgesehenen Fahrgeschwindigkeit 46 vertretbar ist, so kommt es entsprechend dem Pfeil 54 zu dem Verringern 52 der vorgesehenen Fahrgeschwindigkeit 46. Dementsprechend wird dann von dem Fahrerassistenzsystem 14 bei weiterhin aktivierter querführender Komponente 16 beim Durchfahren der Kurve 12 die Längsgeschwindigkeit auf die Alternativgeschwindigkeit geregelt.

Ist das Resultat 50 oder das Resultat 64 demgegenüber ein Nein, wie dies in Fig. 2 durch einen weiteren Pfeil 66 veranschaulicht ist, so kommt es zu einem Beibehalten 68 der vorgesehenen Fahrgeschwindigkeit 46, also der prädizierten Längsgeschwindigkeit des Fahrzeugs 10. In diesem Fall wird die querführende Komponente 16 des Fahrerassistenzsystems 14 deaktiviert.

In beiden Fällen, also sowohl bei dem Verringern 52 der Längsgeschwindigkeit auf die Alternativgeschwindigkeit als auch bei dem Beibehalten 68 der prädizierten Längsgeschwindigkeit kann an den Fahrer des Fahrzeugs 10 ein Hinweis 70 ausgegeben werden. Der Hinweis 70 kann beispielsweise die Aufforderung beinhalten, dass der Fahrer des Fahrzeugs 10 die Querführung des Fahrzeugs 10 zu übernehmen hat. Denn wenn nicht mehr allein die querführende Komponente 16 die Querführung des Fahrzeugs 10 beim Durchfahren der Kurve 12 bewerkstelligt, so ist dafür zu sorgen, dass diese Querführung von dem Fahrer des Fahrzeugs 10 übernommen wird.

Zusätzlich oder alternativ kann der Hinweis 70 zum Inhalt haben, dass die vorgesehene Fahrgeschwindigkeit 46 beziehungsweise die prädizierte Längsgeschwindigkeit auf die Alternativgeschwindigkeit verringert werden wird oder dass das Fahrerassistenzsystem 14 beabsichtigt, dieses Verringern 52 vorzunehmen.

Insbesondere kann dem Fahrer des Fahrzeugs 10 beispielsweise kommuniziert werden, dass das Verringern 52 der Längsgeschwindigkeit vorgesehen ist, obwohl der Fahrer des Fahrzeugs 10 ursprünglich eine andere Setzgeschwindigkeit beziehungsweise Längsgeschwindigkeit vorgegeben hatte. Diesbezüglich kann vorgesehen sein, dass der Fahrer den Hinweis 70 bestätigt und somit sein Einverständnis damit erklärt, dass es zu dem Verringern 52 der Setzgeschwindigkeit kommt.

Insbesondere wenn der Hinweis 70 lautet, dass der Fahrer des Fahrzeugs 10 die Querführung des Fahrzeugs 10 zu übernehmen hat, ist das Ausgeben des Hinweises 70 sinnvoll, um den Fahrer des Fahrzeugs 10 diesbezüglich zu warnen. Eine entsprechende Warnung kann in Form einer Textmeldung und/oder eines akustischen Signals und/oder einer Sprachnachricht oder dergleichen ausgegeben werden.

Beispielsweise kann der Fahrer des Fahrzeugs 10 aufgefordert werden, ein Lenkrad des Fahrzeugs 10 mit beiden Händen zu ergreifen. Wenn festgestellt wird, dass der Fahrer des Fahrzeugs 10 das Lenkrad bereits mit einer Hand hält, so kann auch durch eine Vibration des Lenkrads der Fahrer des Fahrzeugs 10 dazu angehalten werden beziehungsweise aufgefordert werden, mit beiden Händen das Lenkrad zu ergreifen und so besonders sicher für die Querführung des Fahrzeugs 10 beim Durchfahren der Kurve 12 mit der nicht verringerten Längsgeschwindigkeit zu sorgen.

Insbesondere kann vorgesehen sein, dass wenigstens ein Parameter wie etwa die vorgesehene Fahrgeschwindigkeit 46 und/oder der bei dem Vergleich 60 heranzuziehende Grenzwert und/oder wenigstens ein bei dem Beurteilungsschritt 62 herangezogener Umstand entsprechend programmiert werden kann beziehungsweise applizierbar ist. Dadurch können derartige Parameter des Fahrerassistenzsystems 14 angepasst beziehungsweise verändert werden, wenn sich dies als sinnvoll oder wünschenswert herausstellt.

Insgesamt zeigen die Beispiele, wie ein verbessertes Verfahren zur Regelung der Längsgeschwindigkeit in dem Fahrerassistenzsystem 14 des Fahrzeugs 10 insbesondere beim Durchfahren der Kurve 12 realisiert werden kann.

### Bezugszeichenliste

- 10: Fahrzeug
- 12: Kurve
- 14: Fahrerassistenzsystem
- 16: Komponente
- 18: Kamera
- 20: Bereich
- 22: Fahrspur
- 24: Fahrbahnmarkierung
- 26: Server
- 28: Doppelpfeil
- 30: Fahrweg
- 32: Fremdfahrzeug
- 34: Fahrerassistenzsystem
- 36: Komponente
- 38: Daten
- 40: Fahrgeschwindigkeit
- 42: Entscheidungsblock
- 44: Fahrgeschwindigkeit
- 46: Fahrgeschwindigkeit
- 48: Vergleichsschritt
- 50: Resultat
- 52: Verringern
- 54: Pfeil
- 56: Querbeschleunigung
- 58: Querbeschleunigung
- 60: Vergleich
- 62: Beurteilungsschritt
- 64: Resultat
- 66: Pfeil
- 68: Beibehalten
- 70: Hinweis

## Patentansprüche

1. Verfahren zum Betreiben eines Fahrerassistenzsystems (14) eines Fahrzeugs (10), bei welchem das Fahrerassistenzsystem (14) eine Fahrgeschwindigkeit (40) wenigstens eines Fremdfahrzeugs (32) zumindest mittelbar berücksichtigt, mit welcher das wenigstens eine Fremdfahrzeug (32) eine in Fahrtrichtung des Fahrzeugs (10) vor dem Fahrzeug (10) angeordnete Kurve (12) durchfahren hat,
wobei eine von dem Fahrerassistenzsystem (14) für ein Durchfahren der Kurve (12) vorgesehene Fahrgeschwindigkeit (46) des Fahrzeugs (10) überprüft wird, wobei für dieses Überprüfen die Fahrgeschwindigkeit (40) des wenigstens einen Fremdfahrzeugs (32) zumindest mittelbar berücksichtigt wird,
wobei im Anschluss an das Überprüfen der vorgesehenen Fahrgeschwindigkeit (46) von dem Fahrerassistenzsystem (14) entschieden wird, ob die vorgesehene Fahrgeschwindigkeit (46) verringert oder beibehalten wird, **dadurch gekennzeichnet, dass** dann, wenn die vorgesehene Fahrgeschwindigkeit (46) beibehalten wird, eine querführende Komponente (16) des Fahrerassistenzsystems (14) deaktiviert wird.

2. Verfahren nach Anspruch 1,
**dadurch gekennzeichnet, dass**
das Fahrerassistenzsystem (14) jeweilige beim Durchfahren der Kurve (12) vorliegende Fahrgeschwindigkeiten (40) einer Vielzahl von Fremdfahrzeugen (32) berücksichtigt, wobei die vorgesehene Fahrgeschwindigkeit (46) mit wenigstens einer Bezugsgeschwindigkeit verglichen wird, welche aus zumindest einem Teil der jeweiligen Fahrgeschwindigkeiten (40) ermittelt wird.

3. Verfahren nach Anspruch 2,
**dadurch gekennzeichnet, dass**
für das Ermitteln der wenigstens einen Bezugsgeschwindigkeit diejenigen Fremdfahrzeuge (32) berücksichtigt werden, bei welchen beim Durchfahren der Kurve (12) eine querführende Komponente (36) eines Fahrerassistenzsystems (34) des jeweiligen Fremdfahrzeugs (32) aktiv war.

4. Verfahren nach Anspruch 2 oder 3,
**dadurch gekennzeichnet, dass**
das Fahrerassistenzsystem (14) zum Ermitteln der wenigstens einen Bezugsgeschwindigkeit eine Version der querführende Komponente (36) des Fahrerassistenzsystems (34) und/oder ein jeweiliges Fahrzeugmodell der Fremdfahrzeuge (32) berücksichtigt.

5. Verfahren nach einem der vorhergehenden Ansprüche,
**dadurch gekennzeichnet, dass**
das Fahrerassistenzsystem (14) die Fahrgeschwindigkeit (40) des wenigstens einen Fremdfahrzeugs (32) mittelbar berücksichtigt, indem für das Überprüfen der vorgesehenen Fahrgeschwindigkeit (46) eine Querbeschleunigung (56) des wenigstens einen Fremdfahrzeugs (32) beim Durchfahren der Kurve (12) und/oder eine Querbeschleunigung (58), welche sich infolge der vorgesehenen Fahrgeschwindigkeit (46) beim Durchfahren der Kurve (12) unter Berücksichtigung eines Fahrwegs (30) des wenigstens einen Fremdfahrzeugs (32) einstellt, mit einem vorbestimmten Grenzwert der Querbeschleunigung verglichen wird.

6. Verfahren nach Anspruch 5,
**dadurch gekennzeichnet, dass**
die Querbeschleunigung (56) des wenigstens einen Fremdfahrzeugs (32) dem Fahrerassistenzsystem (14) von einer fahrzeugexternen Speichereinrichtung (26) übermittelt wird, und/oder das Fahrerassistenzsystem (14) die Querbeschleunigung (56) des wenigstens einen Fremdfahrzeugs (32) basierend auf einem Fahrweg (30) des wenigstens einen Fremdfahrzeugs (32) beim Durchfahren der Kurve (12) und der entlang des Fahrwegs (30) vorliegenden Fahrgeschwindigkeit (40) des wenigstens einen Fremdfahrzeugs (32) ermittelt.

7. Verfahren nach Anspruch 5 oder 6,
**dadurch gekennzeichnet, dass**
basierend auf dem Vergleich der Querbeschleunigung (56, 58) mit dem Grenzwert eine von der vorgesehenen Fahrgeschwindigkeit (46) abweichende Alternativgeschwindigkeit bestimmt wird, wobei von dem Fahrerassistenzsystem (14) eine Abweichung der Alternativgeschwindigkeit von der vorgesehenen Fahrgeschwindigkeit (46) beurteilt wird.

8. Verfahren nach Anspruch 7,
**dadurch gekennzeichnet, dass**
an einen Fahrer des Fahrzeugs (10) infolge des Überprüfens wenigstens ein Hinweis (70) ausgegeben wird, wobei der an den Fahrer ausgegebene wenigstens eine Hinweis (70)
- eine, insbesondere in einer Mehrzahl von Warnstufen ausgegebene, Aufforderung beinhaltet, eine Querführung des Fahrzeugs (10) zu übernehmen, und/oder
- ein Kommunizieren einer von der vorgesehenen Fahrgeschwindigkeit (46) abweichenden, insbesondere von dem Fahrer bestätigbaren, Alternativgeschwindigkeit beinhaltet.

9. Fahrzeug (10) mit einem Fahrerassistenzsystem (14), wobei das Fahrerassistenzsystem (14) dazu ausgebildet ist, eine Fahrgeschwindigkeit (40) wenigstens eines Fremdfahrzeugs (32) zumindest mittelbar zu berücksichtigen, mit welcher das wenigstens eine Fremdfahrzeug (32) eine in Fahrtrichtung des Fahrzeugs (10) vor dem Fahrzeug (10) angeordnete Kurve (12) durchfahren hat,
wobei das Fahrerassistenzsystem (14) dazu ausgebildet ist, eine von dem Fahrerassistenzsystem (14) für ein Durchfahren der Kurve (12) vorgesehene Fahrgeschwindigkeit (46) des Fahrzeugs (10) zu überprüfen und für dieses Überprüfen die Fahrgeschwindigkeit (40) des wenigstens einen Fremdfahrzeugs (32) zumindest mittelbar zu berücksichtigen,
wobei das Fahrerassistenzsystem (14) dazu ausgebildet ist, im Anschluss an das Überprüfen der vorgesehenen Fahrgeschwindigkeit (46) zu entscheiden, ob die vorgesehene Fahrgeschwindigkeit (46) verringert oder beibehalten wird, **dadurch gekennzeichnet, dass** das Fahrerassistenzsystem (14) dazu ausgebildet ist, dann, wenn die vorgesehene Fahrgeschwindigkeit (46) beibehalten wird, eine querführende Komponente (16) des Fahrerassistenzsystems (14) zu deaktivieren.

## Claims

1. Method for operating a driver assistance system (14) of a vehicle (10), in which the driver assistance system (14) at least indirectly takes into account a driving speed (40) of at least one other vehicle (32), at which the at least one other vehicle (32) has driven through a curve (12) arranged in front of the vehicle (10) in the direction of travel of the vehicle (10),
a driving speed (46) of the vehicle (10) intended by the driver assistance system (14) for driving through the curve (12) being checked, the driving speed (40) of the at least one other vehicle (32) being at least indirectly taken into account for this check,
the driver assistance system (14) deciding whether the intended driving speed (46) is reduced or maintained following the check of the intended driving speed (46), **characterized in that** when the intended driving speed (46) is maintained, a laterally guiding component (16) of the driver assistance system (14) is deactivated.

2. Method according to claim 1,
**characterized in that**
the driver assistance system (14) takes into account respective driving speeds (40) of a plurality of other vehicles (32) when driving through the curve (12), the intended driving speed (46) being compared with at least one reference speed which is determined from at least some of the respective driving speeds (40).

3. Method according to claim 2,
**characterized in that**
to determine the at least one reference speed, the other vehicles (32) are taken into account for which a laterally guiding component (36) of a driver assistance system (34) of the particular other vehicle (32) was active when driving through the curve (12).

4. Method according to either claim 2 or 3,
**characterized in that**
the driver assistance system (14) takes into account a version of the laterally guiding component (36) of the driver assistance system (34) and/or a particular vehicle model of the other vehicles (32) to determine the at least one reference speed.

5. Method according to any of the preceding claims,
**characterized in that**
the driver assistance system (14) indirectly takes into account the driving speed (40) of the at least one other vehicle (32) by comparing a lateral acceleration (56) of the at least one other vehicle (32) when driving through the curve (12) and/or a lateral acceleration (58) which occurs as a result of the intended driving speed (46) when driving through the curve (12) taking into account a travel path (30) of the at least one other vehicle (32) with a predetermined limit value of the lateral acceleration to check the intended driving speed (46).

6. Method according to claim 5,
**characterized in that**
the lateral acceleration (56) of the at least one other vehicle (32) is transmitted to the driver assistance system (14) from a vehicle-external storage device (26), and/or the driver assistance system (14) determines the lateral acceleration (56) of the at least one other vehicle (32) on the basis of a travel path (30) of the at least one other vehicle (32) when driving through the curve (12) and the travel speed (40) of the at least one other vehicle (32) along the travel path (30).

7. Method according to either claim 5 or 6,
**characterized in that**
an alternative speed deviating from the intended driving speed (46) is determined on the basis of the comparison of the lateral acceleration (56, 58) with the limit value, the driver assistance system (14) assessing a deviation of the alternative speed from the intended driving speed (46).

8. Method according to claim 7,
**characterized in that**
at least one indication (70) is issued to a driver of the vehicle (10) as a result of the check, the at least one indication (70) issued to the driver including
- a request, in particular issued in multiple warning stages, to take over lateral guidance of the vehicle (10), and/or
- communication of an alternative speed which deviates from the intended driving speed (46), in particular which can be confirmed by the driver.

9. Vehicle (10) having a driver assistance system (14), the driver assistance system (14) being designed to at least indirectly take into account a driving speed (40) of at least one other vehicle (32), at which the at least one other vehicle (32) has driven through a curve (12) arranged in front of the vehicle (10) in the direction of travel of the vehicle (10),
the driver assistance system (14) being designed to check a driving speed (46) of the vehicle (10) intended by the driver assistance system (14) for driving through the curve (12) and to at least indirectly take into account the driving speed (40) of the at least one other vehicle (32) for this check,
the driver assistance system (14) being designed to decide whether the intended driving speed (46) is reduced or maintained following the check of the intended driving speed (46), **characterized in that** the driver assistance system (14) is designed to deactivate a laterally guiding component (16) of the driver assistance system (14) when the intended driving speed (46) is maintained.

## Revendications

1. Procédé permettant de faire fonctionner un système d'aide à la conduite (14) d'un véhicule (10), dans lequel le système d'aide à la conduite (14) prend au moins indirectement en compte une vitesse de circulation (40) d'au moins un véhicule étranger (32) à laquelle l'au moins un véhicule étranger (32) a passé un virage (12) disposé devant le véhicule (10) dans le sens de circulation du véhicule (10),
dans lequel une vitesse de circulation (46) du véhicule (10) prévue par le système d'aide à la conduite (14) pour un passage du virage (12) est vérifiée, dans lequel la vitesse de circulation (40) de l'au moins un véhicule étranger (32) est prise au moins indirectement en compte pour ladite vérification,
dans lequel, à la suite de la vérification de la vitesse de circulation (46) prévue, le système d'aide à la conduite (14) décide si la vitesse de circulation (46) prévue doit être réduite ou maintenue, **caractérisé en ce que,**
lorsque la vitesse de circulation (46) prévue est maintenue, un composant de guidage transversal (16) du système d'aide à la conduite (14) est désactivé.

2. Procédé selon la revendication 1,
**caractérisé en ce que**
le système d'aide à la conduite (14) prend en compte des vitesses de circulation (40) respectives, présentes lors du passage du virage (12), d'une pluralité de véhicules étrangers (32), dans lequel la vitesse de circulation (46) prévue est comparée avec au moins une vitesse de référence déterminée à partir d'au moins une partie des vitesses de circulation (40) respectives.

3. Procédé selon la revendication 2,
**caractérisé en ce que**
pour la détermination de l'au moins une vitesse de référence, sont pris en compte lesdits véhicules étrangers (32) pour lesquels, lors du passage du virage (12), un composant de guidage transversal (36) d'un système d'aide à la conduite (34) du véhicule étranger (32) respectif était actif.

4. Procédé selon la revendication 2 ou 3,
**caractérisé en ce que**
le système d'aide à la conduite (14) prend en compte une version du composant de guidage transversal (36) du système d'aide à la conduite (34) et/ou un modèle de véhicule respectif des véhicules étrangers (32) pour la détermination de l'au moins une vitesse de référence.

5. Procédé selon l'une des revendications précédentes,
**caractérisé en ce que**
le système d'aide à la conduite (14) prend indirectement en compte la vitesse de circulation (40) de l'au moins un véhicule étranger (32) en comparant, pour la vérification de la vitesse de circulation (46) prévue, une accélération transversale (56) de l'au moins un véhicule étranger (32) lors du passage du virage (12) et/ou une accélération transversale (58) qui s'établit suite à la vitesse de circulation (46) prévue lors du passage du virage (12) en prenant en compte une trajectoire (30) de l'au moins un véhicule étranger (32), avec une valeur limite prédéfinie de l'accélération transversale.

6. Procédé selon la revendication 5,
**caractérisé en ce que**
l'accélération transversale (56) de l'au moins un véhicule étranger (32) est transmise au système d'aide à la conduite (14) par un dispositif de mémoire (26) externe au véhicule, et/ou le système d'aide à la conduite (14) détermine l'accélération transversale (56) de l'au moins un véhicule étranger (32) sur la base d'une trajectoire (30) de l'au moins un véhicule étranger (32) lors du passage du virage (12) et de la vitesse de circulation (40) de l'au moins un véhicule étranger (32) présente le long de la trajectoire (30).

7. Procédé selon la revendication 5 ou 6,
**caractérisé en ce que**
sur la base de la comparaison de l'accélération transversale (56, 58) avec la valeur limite, une vitesse alternative s'écartant de la vitesse de circulation (46) prévue est définie, dans lequel un écart de la vitesse alternative par rapport à la vitesse de circulation (46) prévue est évalué par le système d'aide à la conduite (14).

8. Procédé selon la revendication 7,
**caractérisé en ce que**
au moins une indication (70) est délivrée à un conducteur du véhicule (10) suite à la vérification, dans lequel l'au moins une indication (70) délivrée au conducteur
- contient une invitation, délivrée en particulier dans une pluralité de niveaux d'avertissement, à accepter un guidage transversal du véhicule (10), et/ou
- contient une communication, pouvant en particulier être confirmée par le conducteur, d'une vitesse alternative s'écartant de la vitesse de conduite (46) prévue.

9. Véhicule (10) comportant un système d'aide à la conduite (14), dans lequel le système d'aide à la conduite (14) est configuré pour prendre au moins indirectement en compte une vitesse de circulation (40) d'au moins un véhicule étranger (32) à laquelle l'au moins un véhicule étranger (32) a passé un virage (12) disposé devant le véhicule (10) dans le sens de circulation du véhicule (10),
dans lequel le système d'aide à la conduite (14) est configuré pour vérifier une vitesse de circulation (46) du véhicule (10) prévue par le système d'aide à la conduite (14) pour un passage du virage (12) et pour prendre au moins indirectement en compte la vitesse de circulation (40) de l'au moins un véhicule étranger (32) pour ladite vérification,
dans lequel le système d'aide à la conduite (14) est configuré pour décider, à la suite de la vérification de la vitesse de circulation (46) prévue, si la vitesse de circulation (46) prévue doit être réduite ou maintenue, **caractérisé en ce que**
le système d'aide à la conduite (14) est configuré pour désactiver un composant de guidage transversal (16) du système d'aide à la conduite (14) lorsque la vitesse de circulation (46) prévue est maintenue.
